# EUROPEAN PATENT SPECIFICATION

(11) **EP 3 261 739 B1**
(45) Date of publication and mention of the grant of the patent: **08.04.2020**
(21) Application number: 16709138.8
(22) Date of filing: 18.02.2016
(51) Int. Cl.: B01D 3/06, F28F 21/06, B01D 1/26

(54) **EVAPORATOR AND METHOD THEREOF**
VERDAMPFER UND VERFAHREN DAFÜR
ÉVAPORATEUR ET PROCÉDÉ ASSOCIÉ

(30) Priority: 28.02.2015 IN 665MU2015
(43) Date of publication of application: 03.01.2018
(73) Proprietor: Arvind Envisol Limited, Gujarat (IN)
(72) Inventor: KUMAR, Chandan, Ahmedabad Gujarat 380025 (IN); YADAV, Dinesh Jagroop Singh, Ahmedabad Gujarat 380025 (IN)
(74) Representative: Barker Brettell LLP
(86) International application number: PCT/IB2016/050871
(87) International publication number: WO 2016/135593

(56) References cited:
- GB-A- 1 262 400
- US-A- 4 341 601
- US-A- 5 423 952
- US-A1- 2006 157 338

## Description

### CROSS REFERENCE

### TECHNICAL FIELD

The present subject matter generally relates to an evaporator, more specifically the present subject matter relates to a polymer based evaporator and method thereof.

### BACKGROUND

Evaporators are employed in a number of applications including civil as well as industrial applications. Heat exchangers are important and one of the most significant part of an evaporator. Heat exchangers account for the substantial cost involved in any thermal energy transfer device. The heat exchangers use a method of radiation or conduction or convection or a combination thereof to exchange heat. Commonly available heat exchangers deploy metal plates, water-evaporation, oil, radiators, etc to achieve conduction or convention or radiation.

Evaporators have a number of applications for example, air conditioners, refrigerators etc. One such application is desalination. In desalination process, salt and other contaminations are removed from water. In one example, desalination of water is performed using multi-effect evaporation. In this method water is allowed to flow through a number of stages successively. Usually, the first stage is heated by steam. Each successive stage uses heat freed in the previous stage to cause evaporation. Multi state flash evaporation is another method for desalination. The multi state flash evaporation employs forced circulation system. Another method is membrane technology wherein reverse osmosis is used for evaporation. These methods are generally employed for waste water treatment and other applications also. Deploying heat exchangers in applications such as desalination present a number challenges for example, rusting of metal plates, consumption of power, cost of device, cost of maintenance, discharge etc. Several types of evaporators are disclosed in US2006/157338, GB1262400 and US4341601.

It is therefore desirable that a heat exchanger is provided that substantially addresses above and other problems.

### SUMMARY

It is therefore an objective of the subject matter to provide an evaporator and a method of evaporation that overcomes the above and other limitations. In one possibility, the present subject matter provides an evaporator and a method of manufacturing such evaporator.

The present subject matter provides an evaporator according to claim 1. The evaporator comprises a partitioned vessel for including at least a first effect and a second effect. The evaporator further comprises a first enclosure wherein the first enclosure is a polymeric heat exchanger membrane having a thickness in the range of 0.03 to 0.05 mm and the first enclosure is disposed in the first effect and the first enclosure has a first receiver configured to receive vapors. The evaporator further comprises a second enclosure, wherein the second enclosure is a polymeric heat exchanger membrane having a thickness in the range of 0.03 to 0.05 mm and the second enclosure is disposed in the second effect, wherein the second enclosure has a second receiver and the second receiver is configured to receive vapors from the first effect, wherein each of the first enclosure and the second enclosure is a sealed enclosure. The evaporator further comprises a barometric coupler to couple the first effect and second effect, wherein, the barometric coupler as a concentrate transfer mechanism is arranged to maintain a lower differential pressure in the range of 10 to 25 millibar absolute pressure, and wherein the first effect is configured to receive a feed and the second effect is configured to receive a concentrated feed from the first effect. According to an embodiment, the predetermined range is determined based on physical characteristics of the polymer material. According to another embodiment, the second effect is configured to receive the concentrated feed from the first effect based on the predetermined range. In the embodiment of the invention, the first enclosure has a first outer surface and the second enclosure has a second outer surface. The first effect is provided with a first recirculation pump configured to circulate the feed on the first outer surface and the second effect is provided with a second recirculation pump configured to circulate the concentrated feed on the second outer surface. According to a further embodiment, the first receiver is coupled to a Thermo Vapor Re-compressor (TVR) to receive vapors, and the TVR receives vapors from a motive steam and at least a first part of vapors from the second effect. According to yet another embodiment, the evaporator is provided with a condenser and a distillate tank, wherein the condenser is coupled to the second effect to receive at least a second part of vapors from the second effect, the condenser is configured to condense vapors to distillate, and the distillate tank is configured to receive the distillate from the condenser. According to a further embodiment, the condenser is coupled to the first effect to receive at least a third part of vapors from the first effect. According to yet another embodiment, the distillate tank is configured to receive distillate from the first enclosure and the second enclosure. According to a further embodiment, a first distillate collection pot is provided with the first enclosure and a second distillate collection pot is provided with the second enclosure, and the first distillate collection pot and the second distillate collection pot are configured to receive distillates and provide the distillates to the distillate tank. According to yet another embodiment, the distillate tank is coupled to a distillate pre-heater and the distillate pre-heater is configured to receive the feed, heat the feed, and provide heated feed to the first effect. According to a further embodiment, the distillate tank and the distillate pre-heater are coupled through a distillate pump, the distillate pump is configured to extract distillates from the distillate tank, and the distillate pre-heater heats the feed by exchanging heat between the feed and the distillates. According to yet another embodiment, the second effect is coupled to a concentrate pre-heater and the concentrate pre-heater is configured to receive the feed and heat the feed and provide heated feed to the first effect. According to another embodiment, the second effect and the concentrate pre-heater are coupled through a concentrate pump, the concentrate pump is configured to extract the concentrate feed from the second effect, and the concentrate pre-heater heats the feed by exchanging heat between the feed and the concentrate feed. According to a further embodiment, the condenser is provided with a vacuum pump, the vacuum pump is configured to extract non-condensable vapors from the condenser.

According to another aspect, the present subject matter provides, a method of manufacturing an evaporator according to claim 1 comprising: partitioning a vessel to provide a first effect and a second effect, disposing a first enclosure in the first effect and a second enclosure in the second effect, wherein the first enclosure and the second enclosures are made of a polymeric material, and the first enclosure and the second enclosure are sealed enclosures, arranging the first enclosure to receive vapors through a first receiver and the second enclosure to receive vapors from the first effect through a second receiver, coupling barometrically the first effect and the second effect to adjust pressure across the first effect and the second effect in a predetermined range and configuring the first effect to receive a feed and the second effect to receive a concentrated (processed) feed from the first effect.

According to one embodiment, the method includes determining the predetermined range is based on the physical characteristics of the polymer material. According to a second embodiment, the method includes configuring **320** the second effect to receive the concentrated feed from the first effect based on the predetermined range. The method includes configuring a first outer surface of the first enclosure to cause circulation of the feed on the first outer surface and configuring the second outer surface of the second enclosure to cause circulation of the concentrated feed on the second outer surface. According to a further embodiment, the method includes configuring the first enclosure to receive vapors through a Thermo Vapor Re-compressor (TVR), and configuring the TVR to receive vapors from a motive steam and at least a first part of vapors from the second effect. According to a further embodiment, method includes coupling a condenser to the second effect to receive at least a second part of vapors from the second effect and configuring the condenser to condense vapors to for distillate and coupling a distillate tank to the condenser, wherein the distillate tank is configured to receive the distillates. According to a further embodiment, coupling the condenser includes coupling the condenser to the first effect to receive at least a third part of vapors from the first effect. According to a further embodiment, the method includes configuring the distillate tank to receive distillate from the first enclosure and the second enclosure. According to an further embodiment, the method includes providing a pre-heaterto heat the feed by using the distillate and the concentrate feed. According to a further embodiment, the method includes providing a distillate pump for extracting distillate from the distillate tank and a concentrate pump for extracting the concentrate feed from the second effect. According to a further embodiment, the method includes coupling a vacuum pump to the condenser for extracting non-condensable vapors from the condenser.

According to yet another aspect, the present subject matter provides a method of evaporation by an evaporator of claim 1 comprising: supplying a feed in a first effect of a vessel and supplying vapors in a first enclosure, wherein the first enclosure is disposed in the first effect and the first enclosure is made of a polymeric material and the first enclosure is a sealed enclosure having a first outer surface, circulating the feed on the first outer surface causing: generation of vapors in the first effect, reduction of the feed into a concentrated feed in the first effect; and distillate formation in the first enclosure, supplying vapors generated in the first effect to a second enclosure and wherein the second enclosure is disposed in a second effect and supplying the concentrated feed to the second effect while maintaining a differential pressure across the first effect and the second effect in a predetermined range and wherein the second enclosure is made of the polymeric material and is a sealed enclosure and has a second outer surface.

The method includes circulating the concentrated feed on the second outer surface causing generation of vapors in the second effect and distillate formation in the second enclosure. According to a second embodiment, the method includes supplying a first part of vapors generated in the second effect to a condenser for condensing the vapors and producing distillates, and supplying a second part of vapors generated in the second effect to a TVR for introducing the second part into the first enclosure and supplying a third part of the vapors generated in the first effect to the condenser. According to a third embodiment, the method includes preheating the feed using the distillates and the concentrated feed extracted from the second effect. According to a fourth embodiment, the predetermined range is determined based on physical characteristics of the polymer material. According to a fifth embodiment, the method includes extracting non-condensable vapors from the condenser. According to a sixth embodiment, the method includes extracting non-condensable vapors from the condenser.

### BRIEF DESCRIPTION OF DRAWINGS

The subject matter shall now be described with reference to the accompanying figures, wherein:
**FIG. 1** shows a schematic diagram of an evaporator according to one embodiment of the present subject matter;
**FIG. 2** shows a schematic diagram of an evaporator according to another embodiment of the present subject matter;
**FIG. 3** shows a block diagram of a method of manufacturing an evaporator according to an embodiment of the present subject matter; and
**FIG. 4** shows a block diagram of a method of evaporation according to an embodiment of the present subject matter.

### DETAILED DESCRIPTION

It shall become clear to a person, after reading this specification, that the following discussion is intended only for illustration purpose and that the subject matter may be practiced without departing from the spirit of the present subject matter in other embodiments different than the embodiments discussed herein. Before the present subject matter is further described in more details, it is to be understood that the subject matter is not limited to the particular embodiments described, and may vary as such. The present subject matter is being described, for the purpose of explanation only, with the help of an example of heat exchanger deployed in a desalinating device, however it shall become abundantly clear to a person in the art, after reading this specification, that the subject matter may be practiced in other applications where heat is required to be exchanged, for example effluent recycle, process applications by means of evaporation, recovery of constituents through evaporation. It is also to be understood that the terminology used throughout the preceding and forthcoming discussion is for the purpose of describing particular embodiments only, and is not intended to be limiting. It must be noted that as used herein, the singular forms "a", "an", and "the" include plural references unless the context clearly expressly dictates otherwise.

One of the limitations of the existing evaporators is that they employ metals such as titanium, super duplex, hastelloy etc. as heat exchanger. These metals are not only expensive but also difficult to source. In addition, these metals when deployed in evaporators which are being used in applications such as desalination suffer from decay, rusting, corrosion, scaling, pH sensitivity etc. Because these metal parts are expensive and difficult to source therefore replacing such metal parts becomes challenging. Furthermore, these parts of evaporators not only make the evaporators expensive but also make the evaporators extremely unaffordable. The present subject matter provides solutions to these and other problems.

The present subject matter instead of using the expensive metal-plates or tubes etc. as heat exchangers deploys polymer membranes as heat exchanger.

Because polymers are abundantly available and are extremely cheap, replacing metal-plates, tubes etc. with polymer membranes in an evaporator are desirable as it addresses a number of challenges including the ones discussed above. However replacing metals with polymer presents a number of new problems. For example, polymer is not a good conductor of heat, which is one of the essential qualities required during heat exchange. The present subject matter however, provides a solution to this challenge. To address this challenge the present subject matter refers to the property of polymer membranes wherein conductivity of a polymer membrane is inversely proportional to the thickness of the polymer membranes. Therefore, if a polymer membrane could be made sufficiently thin it may conduct heat and may be deployed as a heat exchanger in an evaporator. The thickness of a polymeric heat exchanger that may sufficiently- effectively transfers heat for the purpose of heat exchange turns out to be .03 to .05 mm.

However reducing thickness of the polymer membrane presents a different challenge. In that, the strength of the polymer membrane gets adversely affected, when the thickness of the polymer membrane is reduced. Therefore possibility of the polymer membrane to withstand harsh environment of an evaporator reduces significantly and employing such polymer membrane becomes substantially impossible as a heat exchanger in the evaporator.

Furthermore, conventional evaporators are generally designed to operate on minimum differential pressure ranging between 50-55 millibar. This is because, designing a conventional evaporator that operates in a range wherein the minimum differential pressure is lower than the aforementioned range, requires high surface area of metals, and therefore large amount of metal costs are involved in manufacturing the evaporator, which makes the evaporation prohibitively expensive. On the other hand, a polymeric heat exchanger often fails to withstand differential pressure higher than 25 millibars.. Therefore, merely replacing conventional heat exchanger with a polymeric heat exchanger in an evaporator is not the solution for obtaining an evaporator that has a polymeric heat exchanger, because the polymeric heat exchanger may fail to perform in the pressure condition of the conventional heat exchanger.

The present subject matter provides solution to these and other problems by appropriately maintaining operating condition suitable for a polymeric heat exchanger, while achieving the desired result of the evaporator. The polymeric heat exchanger includes a number of stages. The present subject matter provides, adjusting differential pressure across successive stage using a water lock arrangement. In one possibility, the polymeric heat exchanger is a bag and has an inner surface and an outer surface. A pressure regulator may be deployed to control pressure across successive stages of the polymeric heat exchanger. In another possibility, the present subject matter provides a vapor inlet to introduce vapor into the polymeric heat exchanger. A liquid distribution mechanism for distributing liquid on the outer surface of the polymeric heat exchanger. The present subject matter provides that the differential pressure is maintained at level across the polymer heat exchanger to ensure that the polymer heat exchanger does not fail. Such a predetermined range of differential pressure may be determined based on the physical properties of the polymer heat exchanger. It shall be clear to a person in art, after reading this specification, that the present subject matter provides that differential temperature across the polymer heat exchanger remains lower, because of the lower differential pressure. Often the range of temperature differential across the polymer heat exchanger may be in the range of 2 to 2.5 degree Celsius. The following discussion explains the subject matter in more details with the help of drawings.

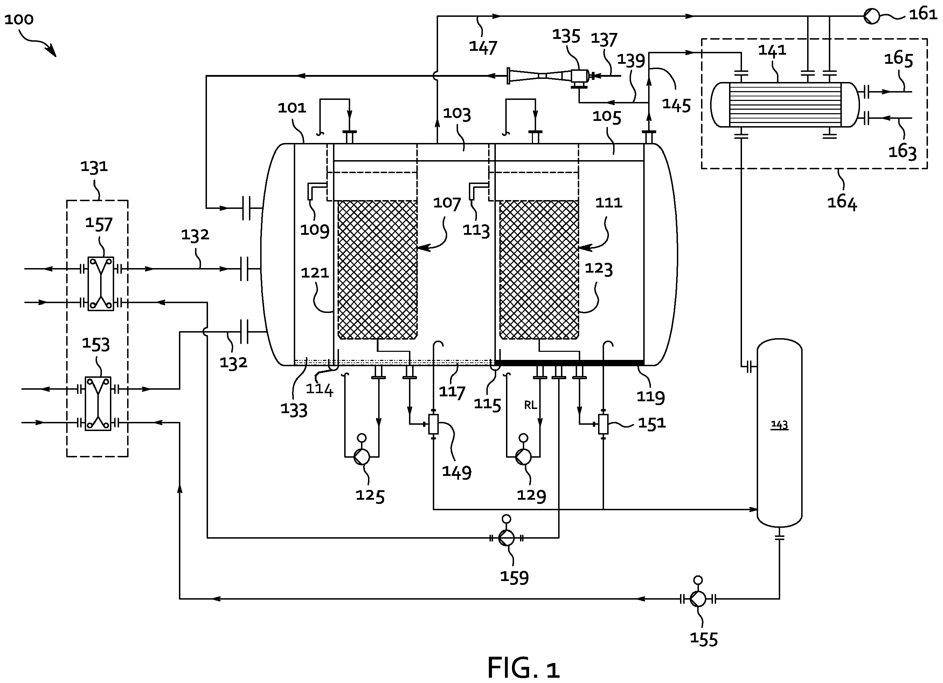

**FIG. 1** shows a schematic diagram of the evaporator **100** according an embodiment of the present subject matter. **FIG. 1** includes a vessel **101,** a first effect **103,** a second effect **105,** a first enclosure **107,** a first receiver **109,** a second enclosure **111,** a second receiver **113,** a first barometric coupler **114,** a second barometric coupler **115,** a feed **117,** a concentrated feed **119,** a first outer surface **121,** a second outer surface **123,** a first recirculation pump **125,** a second recirculation pump **129,** a pre-heater unit **131,** a Thermo Vapor Re-compressor (TVR) **135,** a motive steam **137,** a first part of vapors **139,** a surface condenser **141** and a distillate tank **143,** a second part of vapors **145,** a third part of vapors **147,** a first distillate collection pot **149,** a second distillate collection pot **151,** a distillate pre-heater **153,** a distillate pump **155,** a concentrate pre-heater **157,** a concentrate pump **159,** a vacuum pump **161,** a cold water inlet **163,** a flash chamber **133,** a condenser **164,** feed pipelines **132** and a cold water outlet **165.**

The present subject matter provides the evaporator **100.** In some examples, the evaporator **100** may be employed in applications such as air conditioning systems, refrigeration systems, desalination systems, effluent treatment plants, waste fluid treatment plants or other applications that require evaporation of fluids. On some examples the fluid may include waste water or liquid discharge etc. Some other examples of applications of the evaporator **100** may include an application requiring heat exchange, or requiring extraction of constituents from a solution or fluid.

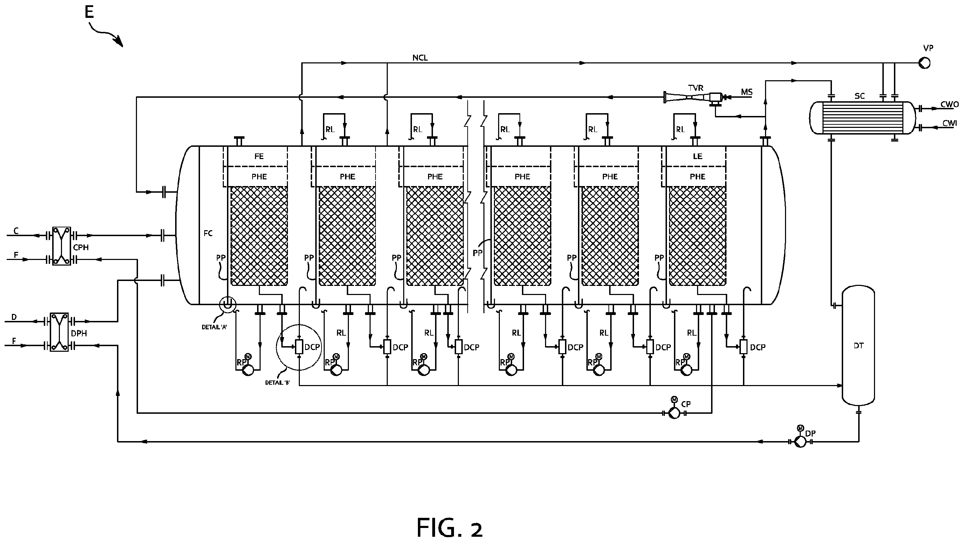

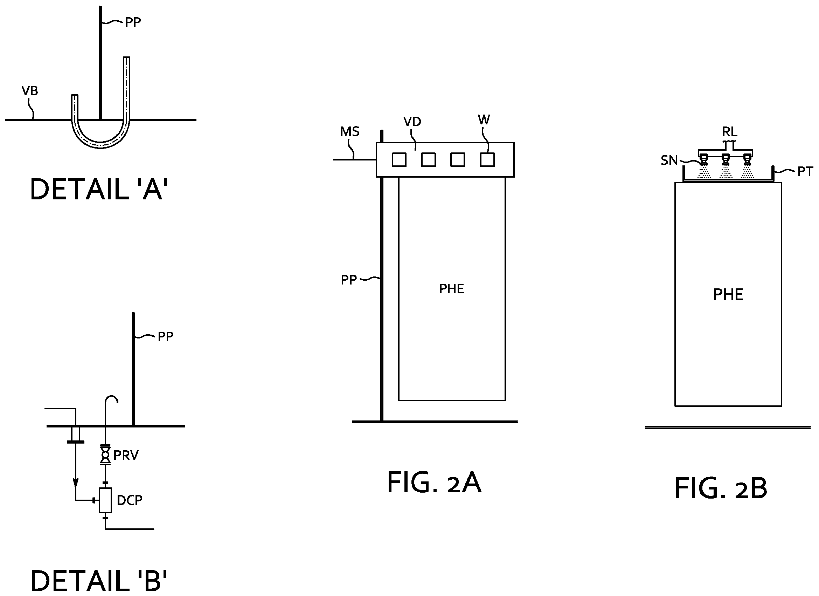

The evaporator **100** comprises the vessel **101** which is partitioned into compartments known as effects. In the present subject matter, for the purpose of illustration, two effects namely, the first effect **103** and the second effect **105** are shown in **FIG. 1****.** It shall become clear to a person, after reading this specification, that number of partitions may be more than two. That is to say, that the vessel **101** may have more than two effects. One illustration of such vessel is shown in **FIG. 2****.** It shall further become clear to a person, after reading this specification, that the vessel **100** is scalable by increasing or decreasing the number of partitions. The vessel **100** may be employed in applications having variable evaporation volume requirements. The vessel **100** may be scaled-up or scaled-down according to the size requirements by adjusting number of effects in the vessel **100.** In some other embodiments, evaporation capacity of the vessel **100** may be adjusted by merely adjusting the number of effects in the vessel **100** without changing the size of the vessel **100.** In such embodiments, the size of effects or the partition size or the size of the first enclosure and the second enclosures in the vessel **100** may be altered. In some other embodiments, the size of the vessel **100** and the number of effects in the vessel both are adjusted to meet the desired requirements.

The first effect **103** is provided with the first enclosure **107.** In other words, the first enclosure **107** is disposed in the first effect **103.** Similarly the second effect **105** is provided with the second enclosure **111** and the second enclosure **111** is disposed in the second effect **105.** The present subject matter provides that the first enclosure **107** and the second enclosure **111** are made of polymeric material. The first enclosure **107** and the second enclosure **111** are also referred to as Polymeric Heat Exchangers (PHE). The first enclosure **107** and the second enclosure **111** are polymeric bags. The first enclosure **107** and the second enclosure **111** are generally sealed enclosures, that is to say, that anything that enters into the first enclosure **107** is not directly exposed to the first effect **103.** Similarly, anything that enters into the second enclosure **111** is not directly exposed to the second effect **105.**

The polymeric bags, namely, the first enclosure **107** and the second enclosure **111** are used as heat exchangers. As explained earlier, the polymers or the polymeric bags are generally known for being bad heat conductors. The present subject matter despite of the polymers being bad heat conductors employs them fairly successfully as heat exchanger. The present subject matter achieves this objective by exploiting physical characteristics of the polymers that is, the heat exchanging capacity of the polymers is inversely proportional to the thickness of the polymer. The present subject matter employs the polymers in the evaporator **100** which is of thickness that enables effective heat exchange across the polymer layer. However, reducing thickness of the polymer present s another problem wherein, a polymer bag with reduced thickness, that is, thin polymer bag is likely to tear off in the harsh environment of the evaporator **100** which often is a high pressure environment, to which the polymer bags are likely to be vulnerable. The present subject matter provides solution to this and other problems by managing the pressure in the vessel **100.** This feature of the present subject matter shall become clearer in the subsequent discussion.

The present subject matter provides the first enclosure **107** with the first receiver **109** and the second enclosure **111** is with the second receiver **113.** While the first receiver **109** is configured to receive vapors through the TVR **135,** the second receiver **113** receives vapors that are generated in the first effect **103.** Therefore, the pressure inside the second enclosure **111** is same as the pressure inside the first effect **103.** Further the present subject matter provides the second barometric coupler **115** that couples the first effect **103** and the second effect **105.**

The feed **117** may be in the form of a fluid or solution from which the constituents are to be extracted after evaporation. The feed **117** may be received into the vessel **101** through the feed pipelines **132.** The present subject matter provides the flash chamber **133** and the first barometric coupler **114** that couples the flash chamber **133** to the first effect **103.** In some embodiments, the flash chamber **133** may be one of the effects of the evaporator **100** without a respective enclosure. In some embodiments, the flash chamber **133** may be understood as a temporary storage of feed **117** and the vapors. The role of the flash chamber **133** is also in ensuring the pressure differential across the flash chamber **133** and the first effect **103** is maintained in the predetermined range. In some embodiments, the first enclosure **107** has an opening or duct that opens into the flash chamber **133** to enable entry of the vapor from the flash chamber **133** to the first enclosure **107.** Because the flash chamber **133** and the first enclosure **107** are barometrically coupled through the duct or opening and the flash chamber **133** and the first effect **103** are barometrically coupled through the first barometric coupler **114** maintaining pressure differential across the flash chamber **133** and the first enclosure **107** also ensure -in the predetermined range- also ensure that the pressure differential across the first enclosure **107** and the first effect **103** are maintained in said predetermined range.

The present subject matter provides the first enclosure **107** with a first outer surface **121** and the second enclosure **111** with the second outer surface **123.** The present subject matter also provides the first effect **103** with the first recirculation pump **125** and the second effect **105** with the second recirculation pump **129.** The first recirculation pump **125** is configured to circulate the feed **117** within the first effect **103.** In some embodiments, the first recirculation pump **125** is configured to take the feed **117** on top of the first enclosure **107** and discharge the feed **117** in the form of a shower such that the shower trickles down the first outer surface **121** of the first enclosure **107.** The vapors received through the first receiver **109** into the first enclosure **107** condense inside the first enclosure **107.** The condensed vapors are in the liquid state at the bottom of the first enclosure **107** that may be referred to as a distillate. Due to this condensation, latent heat is released inside the first enclosure **107** and exchanged through the polymer material of the first enclosure **107** to the first outer surface **121.** The exchanged heat is conveyed to the shower of feed **117** at the first outer surface **121,** resulting in substantial evaporation of the feed **117** giving rise to vapors and the feed **117** gets concentrated. The vapors thus generated at the first outer surface **121** are coupled through the second receiver **113** and to the second enclosure **111.** The second barometric coupler **115** couples the feed **117** from the first effect **103** to the second effect **105.** The feed **117** after considerable evaporation of vapors becomes a concentrated feed **119** which gets transferred to the second effect **105.**

The second recirculation pump **129** is configured to circulate the concentrated feed **119** within the second effect **105.** In some embodiments, the second recirculation pump **129** is configured to take the concentrated feed **119** on top of the second enclosure **111** and discharge the concentrated feed **119** in the form of a shower such that the shower trickles down the second outer surface **123** of the second enclosure **111.** The vapors received inside the second enclosure **111** condense to form a distillate at the bottom of the second enclosure **111.** The latent heat released during the condensation is transferred across the polymer material of the second enclosure and evaporation of the concentrated feed **119** at the second outer surface of the second enclosure takes place. It shall become clear to a person, after reading this specification that similar condensation and evaporation can take place in a number stage corresponding to subsequent effects if provided and made available in some other embodiments of the evaporator **100.**

Introducing the feed **117** from the first effect **103** to the second effect **105** is rather challenging because a differential pressure is required to be maintained between successive stages. The present subject matter provides a barometric coupler **115** to overcome this challenge by coupling the first effect **103** and the second effect **105,** wherein, the barometric coupler **115** is arranged to adjust pressure across the first effect **103** and the second effect **105** at a predetermined range. In some embodiments, the predetermined range may be in the order of 25 millibars. The barometric coupler **115** is sometimes referred to as a concentrate transfer mechanism (CTM). CTM includes a U-seal or a seal that has a shape substantially similar to "U" and is configured to maintain a differential pressure across two successive stages e.g. between the first effect **103** and the second effect **105** in the illustrated figure by adjusting height of the U-seal inside both the effects. The U-seal may be seen as a water lock arrangement that may effectively adjust itself to maintain a differential pressure across the effects.

To summarize, the evaporator **100** illustrated in **FIG. 1** receives a feed **117** undergoes two stages of evaporation in the first effect **103** and second effect **105** and get reduced to its constituents such as distillates and a concentrated feed **119.** The motive steam **137** and a first part of vapors **139** are compressed by the TVR **135**. In one of the embodiments, the TVR **135** can be visualized as equipment for increasing the pressure of the steam and the first part of vapors **139** through the TVR **135** and to the first receiver **109** through the first enclosure **107.** Initially, when the evaporator **100** starts operating, the first enclosure **107** may receive only the motive steam **137** and the first part of vapors **139** may not be available.

The motive steam **137** condenses inside the first enclosure **107.** Consequently, latent heat is released by the condensing motive steam **137.** The feed **117** present on the first outer surface **121** of the first enclosure **107** evaporates due to latent heat exchange between the motive steam **137** and the feed **117.** The evaporation gives rise to vapors that are coupled to the second enclosure **111** through the second receiver **113.** The condensation and vapor formation repeatedly occurs in the second effect **105** and may be continued in the subsequent effects if and when such additional effects are provided in a larger system. As a result of evaporation, the feed **117** becomes a concentrated feed **119** that will further get coupled to the second effect **105** for circulation and further evaporation. The concentrated feed **119** may get more and more concentrated as it undergoes successive stages of evaporation in subsequent effects when a number of effects are provided. The concentrated feed **119** may be finally removed from the last effect by means of the concentrate pump **159.**

The second part of vapors **145** produced in the second effect **105** is coupled to the condenser **164.** The condenser **164** is provided with a surface condenser **141** where the second part of vapors **145** are condensed to form a distillate. The surface condenser **141** is provided with a cold water inlet **163** and a cold water outlet **165** through which cold water is circulated through a series of metallic pipelines inside the surface condenser **141** to facilitate the condensation of the second part of vapors **145.** The outlet of cold water outlet **165** may be connected to a cooling tower and pump for recycling the water with reduced temperature. The surface condenser **141** is coupled with a third part of vapors **147** received from the first effect **103.** The third part of vapors **147** may comprise condensable vapors and non-condensable gases e.g. carbon-dioxide. The condensable vapors enter the condenser **164** and get condensed in the surface condenser **141** and non-condensable gases are vented out of the evaporator using the vacuum pump **161.**

The distillates inside the first enclosure **107** and the second enclosure **111** are collected by the respective distillate collection pots namely the first distillate collection pot **149** and the second distillate collection pot **151.** The distillate tank **143** is provided to collect and store all the distillates. The distillate tank **143** is coupled to the surface condenser **141,** the first distillate collection pot **149** and the second distillate collection pot **151** to facilitate collection of the distillates from these temporary storages. The distillates thus collected are extracted and sent out of the evaporator for further use by a distillate pump **155** that is coupled to the distillate tank.

The concentrate feed at the output of concentrate pump **159** and the distillate at the output of the distillate pump **155** may still carry a considerable amount of heat at the time they exit the vessel **101.** This heat may be exchanged to the feed **117** when it enters the vessel **101** through the feed pipelines **132.** A pre-heater unit **131** comprising the distillate pre-heater **153** and the concentrate pre-heater **157** is provided. The distillate and the concentrated feed are made to pass through the respective heat exchangers namely the distillate pre-heater **153** and the concentrate pre-heater **157** so that the feed is heated to a considerable extent before entering the vessel **101.** In this manner, the overall efficiency of the evaporator is considerably increased.

FIG. **2** shows a schematic diagram of the evaporator according to another embodiment of the present subject matter. The constructional details of the evaporator shown in **FIG. 2** is substantially similar to that of the evaporator explained with the schematic diagram of **FIG. 1** except that in **FIG. 2**, a set of six effects are shown to illustrate the design of the evaporator with multiple effects to increase the capacity. **FIG. 2** shows a vessel **V,** a feed inlet **F,** an distillate outlet **D,** a concentrate outlet **C,** a motive steam inlet **MS,** a distillate pump **DP,** a concentrate pump **CP,** recirculation pumps **RP,** polymeric heat exchangers **PHE,** distillate collection pots **DCP,** a thermo vapor Re-compressor **TVR,** a cooling water inlet **CWI,** a cooling water outlet **CWO,** a concentrate pre-heater **CPH,** a distillate pre-heater **DPH,** a distillate tank **DT,** a surface condenser **SC,** a flash chamber **FC,** a non-condensible line **NCL,** a vacuum pump **VP,** a first effect **FE,** a last effect **LE,** recirculation lines **RL,** partition plates **PP,** and a vessel bottom **VB.**

A stream that needs to be evaporated enters the vessel **V** through the feed inlet F into the flash chamber **FC.** The stream goes through the first effect FE and passes through a number of effects and exits from the last effect **LE.**

Each effect, including the first effect **FE** and the last effect **LE** has a polymeric heat exchanger **PHE,** the recirculation pump **RP,** a vapor entry, a feed entry, a liquid distribution mechanism, a distillate collection pot **DCP** and a concentrate transfer mechanism **CTM.** The polymeric heat exchanger **PHE** is a bag. The polymeric heat exchanger **PHE** has an outer surface and an inner surface. When the feed enters an effect, the feed gets distributed on the outer surface of the polymeric heat exchanger **PHE** with the help of recirculation pump **RP.** The steam enters inside the polymeric heat exchanger **PHE** through the vapor inlet and condenses giving out the latent heat of the steam to the feed present outside of the polymeric heat exchanger **PHE.** The feed present on the outer surface of the polymeric heat exchanger **PHE** evaporates due latent heat exchange between the steam and the feed and creates vapors. The created vapors are then is introduced into the successive effect through the vapor entry of successive effect. The feed that was introduced in the effect initially becomes concentrated because of the evaporation. The concentrated feed is introduced into the successive effect. Introducing the feed from the effect to the successive effect is rather challenging because a differential pressure is required to be maintained between successive stages. The present subject matter provides the concentrate transfer mechanism **CTM** to solve this challenge. The concentrate transfer mechanism **CTM** includes a U-seal or a seal that has a shape substantially similar to "U" and is configured to maintain a differential pressure across two successive stages by adjusting height of the U-seal inside the effect. The U-seal is a water lock. The present subject also provides the distillate collection pot **DCP.** The distillate collection pot **DCP** is provided with a valve arrangement to regulate and control pressure inside an effect.

The present subject matter further provides an arrangement for extracting non-condensable from the effect. It is desirable that any non-condensable material trapped into the effect is removed and therefore effectiveness of the heat transfer process is kept substantially unaffected. The non-condensable line **NCL** collects the non-condensable material from the effect and passes it to the surface condenser **SC** and the non-condensable material is then released out of the evaporator **E** through the vacuum pump **VP.** The steam exits from the last effect **LE.**

In some embodiments, the feed level that is present at the vessel bottom **VB** is maintained at an optimal level so that the polymeric heat exchanger **PHE** works at an optimal efficiency. Between any two consecutive effects a delta pressure gradient is maintained. The delta pressure gradient is such that it does not damage the polymeric heat exchanger **PHE.** In some embodiments, effective pressure gradient between the first effect **FE** to the last effect **LE** is total number of effects multiplied by the delta pressure gradient. In some embodiments, the delta pressure gradient across effects may vary, however it is ensured that the delta pressure gradient does not exceeds a predetermined limit and the predetermined limit is such that it less than the pressure that damages the polymeric heat exchanger **PHE** across which the pressure is being measured. In such embodiments, the effect pressure across the first effect **FE** and the last effect **LE** shall be the sum of pressure gradient across each of the effects.

The distillate outlet **D** comes out in distillate tank **DT** and pumped out using the distillate pump **DP.** During the process the stream that entered through the feed **F** loses some water when the stream reaches the last effect **LE** becomes concentrated and is taken out from the vessel **V** and collected at the concentrate outlet **C** using concentrate pump **CP.** The concentrate outlet **C** and the distillate outlet **D** that comes out from the vessel **V** are hot and carry heat, at the time they exit the vessel **V** and this heat may be reused to heat the stream entering the vessel **V** through **F** using distillate pre heater **DPH** and concentrate pre-heater **CPH.**

In one of the embodiments, each of the effect is provided with a the recirculation pumps **RP** .The recirculation pump **RP** takes the stream that enters through the feed **F** on top of the polymeric heat exchanger **PHE** and distributes it on the surface of the polymeric heat exchanger **PHE.** The vapor from the preceding effect condenses giving out pure distillate and some part of the stream evaporates on the surface of the polymeric heat exchanger **PHE.** This process of evaporation and the condensation is repeated for each effect until the stream reaches the last effect **LE.** At the last effect the remaining stream (in some embodiments vapor) are sent the surface condenser **SC.** The vapor in the surface condenser **SC** condenses and the non condensable gas is vented out of the evaporator using the vacuum pump **VP.**

The thermo vapor Re-compressor **TVR** is provided to take the vapor suction from the last effect **LE,** the vapors are compressed and sent back to the first effect **FE.** The motive steam **MS** is used to drive the thermo vapor Re-compressor **TVR.**

In-Sat **FIG. Detail A** shows details of a water lock. The water-lock is a U-seal. The U-seal ensures that the delta pressure gradient is maintained across an effect. The partition plate **PP** is used to partition the compartment a water lock is created at the vessel bottom **VB** in the form of the U-seal arrangement to create the desired differential pressure.

In-Sat **FIG. Detail B** shows details of the distillate collection. The distillate collection pot **DCP** has a pressure regulating valve **PRV** .This arrangement gives additional control to manage the differential pressure across the polymeric heat exchanger **PHE** in addition to the arrangement provided in **FIG. Detail A.**

**FIG. 2a** shows more details of the motive steam **MS** has a vapor duct **VD** which leads to parallel individual vapor entry in the polymeric heat exchangers which makes vapor entry easy in the polymeric heat exchanger **PHE.**

**FIG. 2b** shows more details of stream distribution over the polymeric heat exchanger **PHE.** **FIG. 2b** shows a spray nozzle **SN,** and a perforated tray **PT.** For effective heat exchange it is desirable that the stream is distributed over the polymeric heat exchanger **PHE** in a manner that an optimal amount of heat may be exchanged. To provide desirable distribution of feed on the polymeric heat exchanger the spray nozzle **SN** is mounted on top of the heat exchanger and the perforated tray **PT** below the spray nozzle **SN.** The liquid passes through the holes and distributes evenly on the surface of the **PHE.**

In one embodiment, the present subject matter provides a heat exchanger used in Polymeric Film Multi Effect Evaporator (PFMEE) is a polymeric heat exchanger unlike metal tubes which are conventionally used for the evaporator. The evaporator has multiple effects.

In another embodiment, the PFMEE has been designed to keep a low differential pressure across the heat exchanger with a special water lock arrangement at the bottom of the evaporator vessel between the effects to make sure that the polymer film can work for the designed pressure and temperature conditions. The differential pressure is in the range of 10 to 25 millibar absolute pressure.

In another embodiment, the distillate collected inside the heat exchanger has a distillate collection pot **DCP** with a pressure regulating valve **PRV.**

In another embodiment, the steam entering into the polymeric heat exchanger **PHE** has a window **W** hooked to the vapor duct **VD.** More details of this embodiment may be found in **FIG. 2****.**

In a further embodiment, the recirculation pump **RP** is used to wet the polymeric heat exchanger **PHE** with the spray nozzle **SN** arrangement and a perforated tray **PT** at the top of the polymeric heat exchanger **PHE** for even distribution of the process feed as shown in **FIG. 2b****.**

In a further embodiment, to avoid the heat loss from the distillate and concentrate an arrangement of pre-heater is provided for better steam economy. In another embodiment, thermo vapor re-compressor **TVR** has been provided in the vapor line between last effect and the surface condenser to recycle part vapor into the first effect and improve the steam economy.

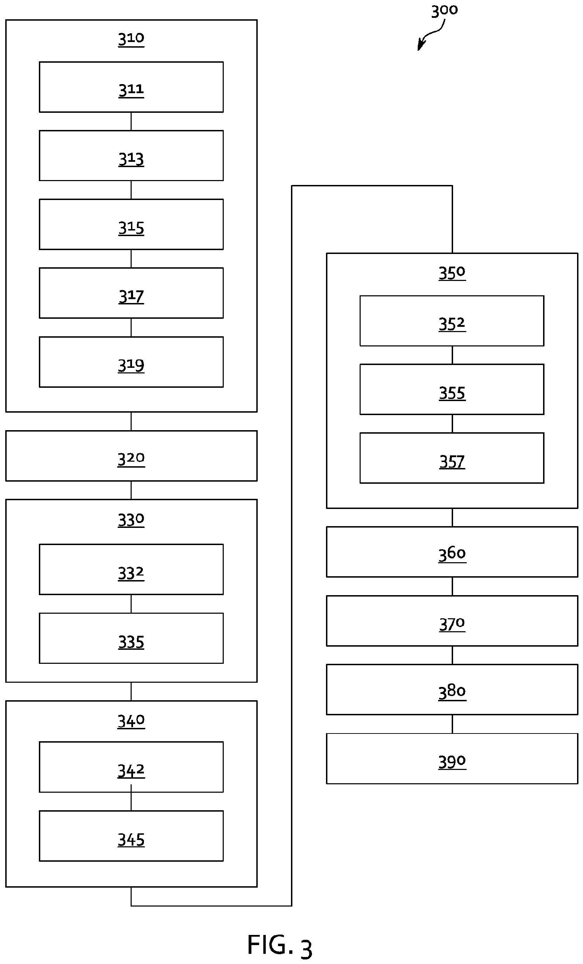

**FIG. 3** shows a block diagram of a method **300** of manufacturing the evaporator according to an embodiment of the present subject matter.

At block **311** a sealed vessel is partitioned into a number of effects. For the purpose of illustration, it may be assumed that the vessel is partitioned into two effects namely a first effect and a second effect. Each of the effect is again independent in the sense that the effect is hermetically sealed. At block **313** an enclosure is disposed in each one of the effects. In one embodiment, at this block, a first enclosure is disposed in the first effect and a second enclosure is disposed in the second effect and so on. Each one of the enclosures is made of polymeric material. The enclosures are again sealed independently with provisions for vapor entry into the enclosures; the vapor entry may be called receivers. Thus, in one embodiment, the first enclosure is provided with a first receiver and the second enclosure is provided with a second receiver and so on. At block **315,** the first receiver is arranged to receive vapors and the second receiver is arranged to receive vapors from the first effect. The vapors received through the respective receivers are allowed to condense within the enclosure to form distillates.

At block **317** a barometric coupling is provided between the first effect and the second effect. The function of the barometric coupling is to adjust pressures across the first effect and the second effect in a predetermined range. The predetermined range is determined based on the physical characteristics of the polymer material. At block **319,** the first effect is configured to receive a feed directly from an external source and the second effect is configured to receive a concentrated feed from the first effect.

The second effect is further configured **320** receive the concentrated feed from the first effect while maintaining pressure across two effects in the predetermined range. Each enclosure has an outer surface and an inner surface. At blocks **330, 332** and **335** provisions are made to spray the feed and the concentrated feed to allow circulation of the feed and the concentrated feed on the outer surfaces. In one embodiment, the feed may be sprayed and circulated on the outer surface of the first enclosure and the concentrated feed may be sprayed and circulated on the second enclosure. At block **342,** the first enclosure is configured **342** to receive compressed vapors, compressed through a Thermo Vapor Re-compressor (TVR). At block **345** the input to the TVR is provided from a motive steam from an external source and at least a first part of vapors from the second effect.

At block **352** a condenser is coupled to the second effect to receive at least a second part of vapors from the second effect. At block **355** the contender is configured to receive vapors from the second effect and condense the vapors into distillate. At block **352,** the input of the condenser may be configured to receive the second part of vapors. At block **360,** the condenser is coupled to the first effect to receive at least a third part of vapors from the first effect. Further at block **357,** a distillate tank is coupled to the condenser to receive the distillate from the condenser. At block **370,** the distillate tank is coupled to receive the distillates from the first enclosure and the second enclosure.

At block **380** a pre-heater is provided. The pre-heater is configured to pre-heat the feed by using the residual heat available in the distillate. At block **390,** a distillate pump is provided to extract distillate from the distillate tank

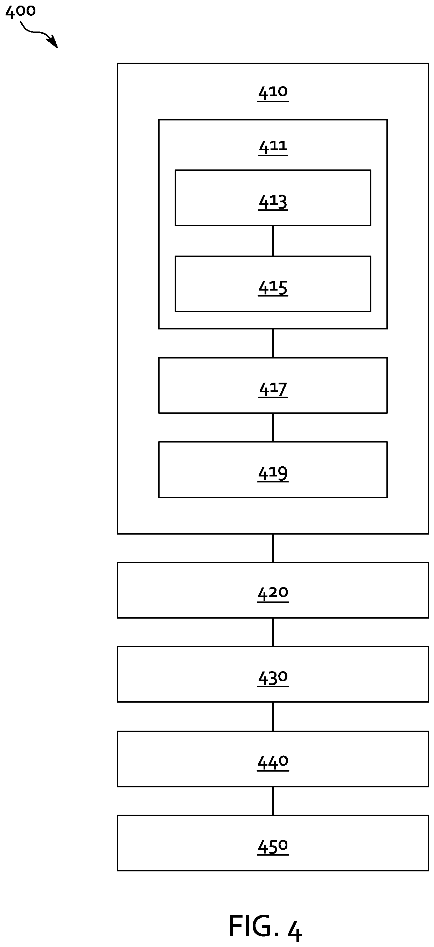

**FIG. 4** shows a block diagram of a method **400** of evaporation according to an embodiment of the present subject matter. The method **400** and its alternate embodiments, which shall become clear to a person after reading this specification, may be practiced using the evaporators as discussed with reference to foregoing FIGs or their alternate embodiments. For the purpose of brevity and clarity, the following discussion makes reference to the evaporator **100** shown in the **FIG. 1** and corresponding elements shown therein.

According to one embodiment of the method **400** at block **413,** a feed is supplied to the first effect and at block **415,** vapors are supplied in the first enclosure. The first enclosure is made of polymeric material. At block **417** the feed is circulated on the first outer surface of the first enclosure. Circulating the feed on the outer surface reduces the feed into concentrated feed and generates the vapors inside the first effect. Further circulating the feed on the outer surface of the first enclosure also causes the distillation of the vapors supplied in the first enclosure.

At block **419,** the vapors generated inside the first effect are supplied to the second enclosure. Further at block **419,** the concentrated feed generated into the first effect is supplied to the second effect. At this block, according to one embodiment, the present subject matter provides maintaining a differential pressure across the first effect and the second effect in a predetermined range. The differential pressure is maintained across the first effect and the second effect within a predetermined range. The predetermined range is determined based on physical characteristics of the polymer material used in the construction of the first enclosure and second enclosure. At block **420,** the concentrated feed that is supplied to the second effect is circulated on the outer surface of the second enclosure. The circulation of the concentrated feed on the outer surface of the second enclosure causes the vapors inside the second enclosure to condense and form distillate. It shall become clear to a person after reading this specification, that in some embodiments, the further concentrated feed which has resulted from evaporation of the concentrated feed in the second effect may be supplied to a third or further stages. Similarly the vapors generated due to evaporation of the concentrated feed in the second effect may be further supplied to the third or the further stages.

According to one embodiment, at block **430,** a first part of the vapors from the second effect are supplied to the condenser and made to condense into distillate inside the condenser. A third part of the vapors generated in the first effect is also supplied to the condenser. A second part of vapors generated in the second effect are supplied to a TVR (Thermo Vapor Recirculation pump) for recirculation into the first enclosure. In some embodiments, a first part of the vapor from the condenser, a second part of the vapor generated from the second enclosure and a third part of the vapor generated from the first enclosure are supplied to the TVR.

In some embodiments, at block **440,** the feed is preheated using the residual heat available in the distillates and heat available in the concentrated feed which has been extracted from the second effect (or the last effect in case of multi stage evaporator). According to one embodiment, at block **450** Non-condensible vapors inside the condenser are extracted from the condenser using pumps.

## Claims

1. An evaporator **(100)** comprising:
a partitioned vessel (101) for including a first effect **(103)** and a second effect **(105);**
a first enclosure **(107),** wherein the first enclosure **(107)** is a polymeric heat exchanger membrane having a thickness in the range of 0.03 to 0.05 mm and the first enclosure **(107)** is disposed in the first effect **(103)** and the first enclosure **(107)** has a first receiver **(109)** configured to receive vapors;
a second enclosure **(111),** wherein the second enclosure **(111)** is a polymeric heat exchanger membrane having a thickness in the range of 0.03 to 0.05 mm and the second enclosure **(111)** is disposed in the second effect **(105),** wherein the second enclosure **(111)** has a second receiver **(113)** and the second receiver **(113)** is configured to receive vapors from the first effect **(103),** wherein each of the first enclosure **(107)** and the second enclosure **(111)** is a sealed enclosure;
a barometric coupler **(115)** as a concentrate transfer mechanism, said barometric coupler couples the first effect **(103)** and second effect **(105),** wherein, the barometric coupler **(115)** is arranged to maintain a lower differential pressure in the range of 10 to 25 millibar absolute pressure across the first effect **(103)** and the second effect **(105),** and wherein the first effect **(103)** is configured to receive a feed **(117)** and the second effect **(105)** is configured to receive a concentrated feed **(119)** from the first effect **(103);** and
the first enclosure **(107)** has a first outer surface **(121)** and the second enclosure has a second outer surface **(123)** and the first effect **(103)** is provided with a first recirculation pump (RP) **(125)** configured to circulate the feed **(117)** on the first outer surface **(121)** and the second effect **(105)** is provided with a second recirculation pump **(129)** configured to circulate the concentrated feed **(119)** on the second outer surface **(123).**

2. The evaporator **(100)** of claim **1,** wherein the evaporator **(100)** is provided with a condenser **(164)** and a distillate tank **(143),** wherein the condenser **(164)** is coupled to the second effect **(105)** to receive at least a second part of vapors **(145)** from the second effect **(105),** the condenser **(164)** is configured to condense vapors to form distillate, and the distillate tank **(143)** is configured to receive the distillate from the condenser **(164)** wherein the distillate tank **(143)** is configured to receive distillate from the first enclosure **(107)** and the second enclosure **(111).**

3. The evaporator **(100)** of claim **1,** wherein a first distillate collection pot **(149)** is provided with the first enclosure **(107)** and a second distillate collection pot **(151)** is provided with the second enclosure **(111),** and the first distillate collection pot **(149)** and the second distillate collection pot **(151)** are configured to receive distillates and provide the distillates to the distillate tank **(143).**

4. A method **(300)** of manufacturing an evaporator (E) as claimed in one of the preceding claims 1-3, said method comprising:
partitioning **(311)** a vessel to provide a first effect and a second effect;
disposing **(313)** a first enclosure in the first effect having a first outer surface and a second enclosure in the second effect having a second outer surface, wherein the first enclosure and the second enclosures are polymeric heat exchangers having a thickness in the range of 0.03 to 0.05 mm, and the first enclosure and the second enclosure are sealed enclosures;
arranging **(315)** the first enclosure to receive vapors through a first receiver and the second enclosure to receive vapors from the first effect through a second receiver;
configuring **(332)** the first effect to cause circulation of the feed on the first outer surface and configuring **(335)** the second effect to cause circulation of the concentrated feed on the second outer surface;
coupling **(317)** barometrically the first effect and the second effect wherein the first effect and the second effect are configured barometrically to maintain a lower differential pressure across the first effect and the second effect in the range of 10 to 25 millibar absolute pressure; and
configuring **(319)** the first effect to receive a feed and the second effect to receive a concentrated feed from the first effect.

5. The method **(300)** of claim 4, wherein configuring **(342)** the first enclosure to receive vapors through a Thermo Vapor Re-compressor (TVR) and configuring **(345)** the TVR to receive vapors from a motive steam and at least a first part of vapors from the second effect.

6. The method **(300)** of claim 4, wherein the method includes: coupling **(352)** a condenser to the second effect to receive at least a second part of vapors from the second effect and configuring **(355)** the condenser to condense vapors to form distillate wherein coupling **(360)** the condenser includes coupling the condenser to the first effect to receive at least a third part of vapors from the first effect; and coupling **(357)** a distillate tank to the condenser, wherein the distillate tank is configured to receive the distillates and configuring **(370)** the distillate tank to receive distillate from the first enclosure and the second enclosure.

7. A method **(400)** of evaporation by an evaporator as claimed in one of the preceding claims 1-3, said method of evaporation comprising:
supplying **(413)** a feed in a first effect of a vessel and supplying **(415)** vapors in a first enclosure, wherein the first enclosure is a polymeric heat exchanger and is disposed in the first effect with a lower differential temperature across the polymeric heat exchanger in the range of 2 to 2.5 degree Celsius and the first enclosure is a sealed enclosure having a first outer surface;
circulating **(417)** the feed on the first outer surface causing: generation of vapors in the first effect, reduction of the feed into a concentrated feed in the first effect, and distillate formation in the first enclosure;
supplying vapors **(419)** generated in the first effect to a second enclosure wherein the second enclosure is a polymeric heat exchanger and is disposed in a second effect with a lower differential temperature across the polymeric heat exchanger in the range of 2 to 2.5 degree Celsius and supplying the concentrated feed to the second effect while maintaining a lower differential pressure across the first effect and the second effect in the range of 10 to 25 millibar absolute pressure and the second enclosure is a sealed enclosure and has a second outer surface;
circulating the concentrated feed **(420)** on the second outer surface causing generation of vapors in the second effect and distillate formation in the second enclosure; and
collecting the distillates from the first enclosure and the second enclosure in a distillate tank.

## Patentansprüche

1. Verdampfer **(100)** umfassend:
ein unterteiltes Gefäß **(101)** zum Einschließen einer ersten Stufe **(103)** und einer zweiten Stufe **(105);**
eine erste Umhüllung **(107),** wobei die erste Umhüllung **(107)** eine polymere Wärmetauschermembran mit einer Dicke im Bereich von 0,03 bis 0,05 mm ist und die erste Umhüllung **(107)** in der ersten Stufe **(103)** angeordnet ist und die erste Umhüllung **(107)** einen ersten Empfänger **(109)** aufweist, der zum Empfangen von Dämpfen konfiguriert ist;
eine zweite Umhüllung **(111),** wobei die zweite Umhüllung **(111)** eine polymere Wärmetauschermembran mit einer Dicke im Bereich von 0,03 bis 0,05 mm ist und die zweite Umhüllung **(111)** in der zweiten Stufe **(105)** angeordnet ist, wobeidie zweite Umhüllung **(111)** einen zweiten Empfänger **(113)** aufweist und der zweite Empfänger **(113)** konfiguriert ist, um Dämpfe aus der ersten Stufe **(103)** zu empfangen, wobei jede von der ersten Umhüllung **(107)** und der zweiten Umhüllung **(111)** eine abgedichtete Umhüllung ist;
eine barometrische Kupplung **(115)** als Konzentratübertragungs-mechanismus, wobei die barometrische Kupplung die erste Stufe **(103)** und die zweite Stufe **(105)** kuppelt, wobei die barometrische Kupplung **(115)** eingerichtet ist, um einen niedrigeren Differenzdruck im Bereich von 10 bis 25 Millibar Absolutdruck über die erste Stufe **(103)** und die zweite Stufe **(105)** aufrechtzuerhalten, und wobei die erste Stufe **(103)** konfiguriert ist, um eine Zufuhr **(117)** zu empfangen, und die zweite Stufe **(105)** konfiguriert ist, um eine konzentrierte Zufuhr **(119)** aus der ersten Stufe **(103)** zu empfangen; und
wobei die erste Umhüllung **(107)** eine erste Außenfläche **(121)** aufweist und die zweite Umhüllung eine zweite Außenfläche **(123)** aufweist und die erste Stufe **(103)** mit einer ersten Umwälzpumpe (RP) **(125)** versehen ist, die konfiguriert ist, um die Zufuhr **(117)** auf der ersten Außenfläche **(121)** umzuwälzen, und die zweite Stufe **(105)** mit einer zweiten Umwälzpumpe **(129)** versehen ist, die konfiguriert ist, um die konzentrierte Zufuhr **(119)** auf der zweiten Außenfläche **(123)** umzuwälzen.

2. Verdampfer **(100)** nach Anspruch 1, wobei der Verdampfer **(100)** mit einem Kondensator **(164)** und einem Destillattank **(143)** versehen ist, wobei der Kondensator **(164)** mit der zweiten Stufe **(105)** gekuppelt ist, um zumindest einen zweiten Teil der Dämpfe **(145)** aus der zweiten Stufe **(105)** zu empfangen, der Kondensator **(164)** konfiguriert ist, um Dämpfe zu kondensieren, um das Destillat zu bilden, und der Destillattank **(143)** konfiguriert ist, um das Destillat aus dem Kondensator **(164)** zu empfangen, wobei der Destillattank **(143)** konfiguriert ist, um Destillat aus der ersten Umhüllung **(107)** und der zweiten Umhüllung **(111)** zu empfangen.

3. Verdampfer **(100)** nach Anspruch 1, wobei ein erster Destillatsammelbehälter **(149)** mit der ersten Umhüllung **(107)** versehen ist und ein zweiter Destillatsammelbehälter **(151)** mit der zweiten Umhüllung **(111)** versehen ist, und der erste Destillatsammelbehälter **(149)** und der zweite Destillatsammelbehälter **(151)** konfiguriert sind, um Destillate zu empfangen und die Destillate an den Destillattank **(143)** bereitzustellen.

4. Verfahren **(300)** zur Herstellung eines Verdampfers (E) nach einem der vorstehenden Ansprüche 1-3, wobei das Verfahren umfasst:
Unterteilen **(311)** eines Gefäßes zum Bereitstellen einer ersten Stufe und einer zweiten Stufe;
Anordnen **(313)** einer ersten Umhüllung in der ersten Stufe mit einer ersten Außenfläche und einer zweiten Umhüllung in der zweiten Stufe mit einer zweiten Außenfläche, wobei die erste Umhüllung und die zweite Umhüllung polymere Wärmetauscher mit einer Dicke im Bereich von 0,03 bis 0,05 mm sind und die erste Umhüllung und die zweite Umhüllung abgedichtete Umhüllungen sind;
Einrichten **(315)** der ersten Umhüllung zum Empfangen von Dämpfen durch einen ersten Empfänger und der zweiten Umhüllung zum Empfangen von Dämpfen aus der ersten Stufe durch einen zweiten Empfänger;
Konfigurieren **(332)** der ersten Stufe zum Bewirken einer Umwälzung der Zufuhr auf der ersten Außenfläche und Konfigurieren **(335)** der zweiten Stufe zum Bewirken einer Umwälzung der konzentrierten Zufuhr auf der zweiten Außenfläche;
barometrisch Kuppeln **(317)** der ersten Stufe und der zweiten Stufe, wobei die erste Stufe und die zweite Stufe barometrisch zum Aufrechterhalten eines niedrigeren Differenzdrucks über die erste Stufe und die zweite Stufe im Bereich von 10 bis 25 Millibar Absolutdruck konfiguriert sind; und
Konfigurieren **(319)** der ersten Stufe zum Empfangen einer Zufuhr und der zweiten Stufe zum Empfangen einer konzentrierten Zufuhr aus der ersten Stufe.

5. Verfahren **(300)** nach Anspruch 4, wobei Konfigurieren **(342)** der ersten Umhüllung zum Empfangen von Dämpfen durch einen Thermo-Dampf-Rückverdichter (TVR) und Konfigurieren **(345)** des TVR zum Empfangen von Dämpfen aus einem Treibdampf und zumindest eines ersten Teils von Dämpfen aus der zweiten Stufe.

6. Verfahren **(300)** nach Anspruch 4, wobei das Verfahren aufweist: Kuppeln **(352)** eines Kondensators mit der zweiten Stufe zum Empfangen zumindest eines zweiten Teils von Dämpfen aus der zweiten Stufe und Konfigurieren **(355)** des Kondensators zum Kondensieren von Dämpfen zum Bilden von Destillat, wobei das Kuppeln **(360)** des Kondensators das Kuppeln des Kondensators mit der ersten Stufe zum Empfangen zumindest eines dritten Teils von Dämpfen aus der ersten Stufe und das Kuppeln **(357)** eines Destillattanks mit dem Kondensator aufweist, wobei der Destillattank zum Empfangen der Destillate konfiguriert ist, und Konfigurieren **(370)** des Destillattanks zum Empfangen von Destillat aus der ersten Umhüllung und der zweiten Umhüllung.

7. Verfahren **(400)** zum Verdampfen durch einen Verdampfer nach einem der vorstehenden Ansprüche 1-3, wobei das Verfahren zum Verdampfen umfasst:
Zuführen **(413)** einer Zufuhr in eine erste Stufe eines Gefäßes und Zuführen **(415)** von Dämpfen in eine erste Umhüllung, wobei die erste Umhüllung ein polymerer Wärmetauscher ist und in der ersten Stufe mit einer niedrigeren Differenztemperatur über dem polymeren Wärmetauscher im Bereich von 2 bis 2,5 Grad Celsius angeordnet ist, und die erste Umhüllung eine abgedichtete Umhüllung mit einer ersten Außenfläche ist;
Umwälzen **(417)** der Zufuhr auf der ersten Außenfläche, bewirkend: Erzeugung von Dämpfen in der ersten Stufe, Reduktion der Zufuhr in eine konzentrierte Zufuhr in der ersten Stufe und Destillatbildung in der ersten Umhüllung;
Zuführen von Dämpfen **(419),** die in der ersten Stufe erzeugt werden, zu einer zweiten Umhüllung, wobei die zweite Umhüllung ein polymerer Wärmetauscher ist und in einer zweiten Stufe mit einer niedrigeren Differenztemperatur über dem polymeren Wärmetauscher im Bereich von 2 bis 2,5 Grad Celsius angeordnet ist, und Zuführen der konzentrierten Zufuhr zu der zweiten Stufe unter Aufrechterhaltung eines niedrigeren Differenzdrucks über der ersten Stufe und der zweiten Stufe im Bereich von 10 bis 25 Millibar Absolutdruck, und die zweite Umhüllung ist eine abgedichtete Umhüllung und weist eine zweite Außenfläche auf;
Umwälzen der konzentrierten Zufuhr **(420)** auf der zweiten Außenfläche, wodurch eine Erzeugung von Dämpfen in der zweiten Stufe und eine Destillatbildung in der zweiten Umhüllung bewirkt wird; und
Sammeln der Destillate aus der ersten Umhüllung und der zweiten Umhüllung in einem Destillattank.

## Revendications

1. Évaporateur **(100)** comprenant :
un récipient cloisonné **(101)** pour inclure un premier effet **(103)** et un second effet **(105)** ;
une première enceinte **(107),** dans lequel la première enceinte **(107)** est une membrane échangeuse de chaleur polymère présentant une épaisseur dans la plage de 0,03 à 0,05 mm et la première enceinte **(107)** est disposée dans le premier effet **(103)** et la première enceinte **(107)** présente un premier récepteur **(109)** configuré pour recevoir des vapeurs ;
une seconde enceinte **(111),** dans lequel la second enceinte **(111)** est une membrane échangeuse de chaleur polymère présentant une épaisseur dans la plage de 0,03 à 0,05 mm et la seconde enceinte **(111)** est disposée dans le second effet **(105),** dans lequel la seconde enceinte **(111)** présente un second récepteur **(113)** et le second récepteur **(113)** est configuré pour recevoir des vapeurs du premier effet **(103),** dans lequel chacune de la première enceinte **(107)** et de la seconde enceinte **(111)** est une enceinte scellée ;
un coupleur barométrique **(115)** sous la forme d'un mécanisme de transfert de concentré, ledit coupleur barométrique couplant le premier effet **(103)** et le second effet **(105)** ; dans lequel le coupleur barométrique **(115)** est agencé pour maintenir une pression différentielle inférieure dans la plage de 10 à 25 millibars de pression absolue à travers le premier effet **(103)** et le second effet **(105)** et dans lequel le premier effet **(103)** est configuré pour recevoir une alimentation **(117)** et le second effet **(105)** est configuré pour recevoir une alimentation concentrée **(119)** du premier effet **(103)** ; et
la première enceinte **(107)** présente une première surface externe **(121)** et la seconde enceinte présente une seconde surface externe **(123)** et le premier effet **(103)** est pourvu d'une première pompe de recirculation (RP) **(125)** configurée pour faire circuler l'alimentation **(117)** sur la première surface externe **(121)** et le second effet **(105)** est pourvu d'une seconde pompe de recirculation **(129)** configurée pour faire circuler l'alimentation concentrée **(119)** sur la seconde surface externe **(123).**

2. Évaporateur **(100)** selon la revendication **1,** dans lequel l'évaporateur **(100)** est pourvu d'un condenseur **(164)** et d'un réservoir de distillat **(143),** dans lequel le condenseur **(164)** est couplé au second effet **(105)** pour recevoir au moins une seconde partie de vapeurs **(145)** du second effet **(105),** le condenseur **(164)** est configuré pour condenser les vapeurs afin de former un distillat et le réservoir de distillat **(143)** est configuré pour recevoir le distillat du condenseur **(164),** dans lequel le réservoir de distillat **(143)** est configuré pour recevoir du distillat de la première enceinte **(107)** et de la seconde enceinte **(111).**

3. Évaporateur **(100)** selon la revendication **1,** dans lequel un premier pot collecteur de distillat **(149)** est pourvu de la première enceinte **(107)** et un second pot collecteur de distillat **(151)** est pourvu de la seconde enceinte **(111)** et le premier pot collecteur de distillat **(149)** et le second pot collecteur de distillat **(151)** sont configurés pour recevoir des distillats et fournir les distillats au réservoir de distillat **(143).**

4. Procédé **(300)** de fabrication d'un évaporateur (E) selon l'une quelconque des revendications précédentes **1-3,** le procédé comprenant :
le cloisonnement **(311)** d'un récipient pour fournir un premier effet et un second effet ;
la disposition **(313)** d'une première enceinte dans le premier effet présentant une première surface externe et d'une second enceinte dans le second effet présentant une seconde surface externe, dans lequel la première enceinte et la seconde enceinte sont des échangeurs de chaleur polymères présentant une épaisseur dans la plage de 0,03 à 0,05 mm et la première enceinte et la seconde enceinte sont des enceintes scellées ;
l'agencement **(315)** de la première enceinte pour recevoir des vapeurs via un premier récepteur et la seconde enceinte pour recevoir des vapeurs du premier effet via un second récepteur ;
la configuration **(332)** du premier effet pour provoquer une circulation de l'alimentation sur la première surface externe et la configuration **(335)** du second effet pour provoquer la circulation de l'alimentation concentrée sur la seconde surface externe ;
le couplage barométrique **(317)** du premier effet et du second effet, dans lequel le premier effet et le second effet ont une configuration barométrique pour maintenir une pression différentielle inférieure à travers le premier effet et le second effet dans la plage de 10 à 25 millibars de pression absolue ; et
la configuration **(319)** du premier effet pour recevoir une alimentation et du second effet pour recevoir une alimentation concentrée du premier effet.

5. Procédé **(300)** selon la revendication **4,** dans lequel la configuration **(342)** de la première enceinte permet de recevoir des vapeurs à travers un re-compresseur de vapeurs thermiques (TVR) et la configuration **(345)** du TVR permet de recevoir des vapeurs d'une vapeur motrice et au moins une première partie de vapeurs du second effet.

6. Procédé **(300)** selon la revendication **4,** dans lequel le procédé comprend : le couplage **(352)** d'un condenseur au second effet pour recevoir au moins une deuxième partie de vapeurs du second effet et la configuration **(355)** du condenseur pour condenser des vapeurs afin de former un distillat, dans lequel le couplage **(360)** du condenseur comprend le couplage du condenseur au premier effet afin de recevoir au moins une troisième partie de vapeurs du premier effet; et le couplage **(357)** d'un réservoir de distillat au condenseur, dans lequel le réservoir de distillat est configuré pour recevoir les distillats et la configuration **(370)** du réservoir de distillat pour recevoir un distillat de la première enceinte et de la seconde enceinte.

7. Procédé **(400)** d'évaporation par un évaporateur selon l'une quelconque des revendications précédentes **1-3,** ledit procédé d'évaporation comprenant :
la fourniture **(413)** d'une alimentation dans un premier effet d'un récipient et la fourniture **(415)** de vapeurs dans une première enceinte, dans lequel la première enceinte est un échangeur de chaleur polymère et est disposée dans le premier effet avec une température différentielle inférieure en travers de l'échangeur de chaleur polymère dans la plage de 2 à 2,5 degrés Celsius et la première enceinte est une enceinte scellée présentant une première surface externe ;
la circulation **(417)** de l'alimentation sur la première surface externe provoquant la génération de vapeurs dans le premier effet, la réduction de l'alimentation en une alimentation concentrée dans le premier effet et une formation de distillat dans la première enceinte ;
la fourniture de vapeurs **(419)** générées dans le premier effet à une seconde enceinte, dans lequel la seconde enceinte est un échangeur de chaleur polymère et est disposée dans un second effet avec une température différentielle inférieure en travers de l'échangeur de chaleur polymère dans la plage de 2 à 2,5 degrés Celsius et la fourniture de l'alimentation concentrée au second effet tout en maintenant une pression différentielle inférieure à travers le premier effet et le second effet dans la plage de 10 à 25 millibars de pression absolue et la second enceinte est une enceinte scellée et présente une seconde surface externe ;
la circulation de l'alimentation concentrée **(420)** sur la seconde surface externe provoquant la génération de vapeurs dans le second effet et la formation de distillats dans la seconde enceinte ; et
la collecte des distillats de la première enceinte et de la seconde enceinte dans un réservoir de distillat.
